# EUROPEAN PATENT APPLICATION

(11) **EP 3 787 257 A1**
(43) Date of publication of application: **03.03.2021**
(21) Application number: 18942087.0
(22) Date of filing: 14.12.2018
(51) Int. Cl.: H04L 29/08

(54) **PATROL ROBOT AND PATROL ROBOT MANAGEMENT SYSTEM**

(30) Priority: 05.12.2018 CN 201811480933
(71) Applicant: Bozhon Precision Industry Technology Co., Ltd., Jiangsu 215200 (CN); Suzhou Bozhon Robot Co., Ltd, Jiangsu 215200 (CN)
(72) Inventor: LI, Sihan, Suzhou, Jiangsu 215200 (CN); LV, Zhecheng, Suzhou, Jiangsu 215200 (CN); SU, Yanyu, Suzhou, Jiangsu 215200 (CN)
(74) Representative: Pfenning, Meinig & Partner mbB
(86) International application number: PCT/CN2018/121242
(87) International publication number: WO 2020/113660

(57) **Abstract**

Disclosed is a patrol robot, including a robot body and a control system disposed on the robot body. The robot body includes a chassis system and an accommodating cavity disposed on the chassis system. The control system includes a main control module, an image processing module and an image collection device. The main control module is electrically connected to the image processing module. The image processing module is electrically connected to the image collection device. The image collection device includes a ball-type camera disposed on the accommodating cavity. The image processing module includes a behavior recognition unit. The behavior recognition unit recognizes pedestrian abnormal behavior according to an ambient image collected by the image collection device to generate pedestrian abnormal behavior recognition information, and the main control module transmits the pedestrian abnormal behavior recognition information to a patrol robot management system. Further disclosed is a patrol robot management system.

## Description

This application claims priority to Chinese Patent Application No. 201811480933.X filed on December 05, 2018, disclosure of which is incorporated herein by reference in its entirety.

### TECHNICAL FIELD

Embodiments of the present invention relate to the technical field of robots, for example, a patrol robot and a patrol robot management system.

### BACKGROUND

At present, security work plays an indispensable role in social and public safety, especially in large parks, convention and exhibition centers, large airports, logistics warehouses and other places. With continuous increase in number of these places and expand of scale of these places, more and more humanpower, material and security resources are needed to ensure safe operation of these places.

Related security technology is mainly based on manpower patrol and static camera fixed-point monitoring to monitor abnormal behavior and outdoor ambient conditions. However, a monitoring network formed of manpower patrols and fixed-point cameras has inherent weaknesses such as easy fatigue of security guard and dead corners of cameras, making it impossible to monitor a target area in real-time and dynamically, nor to intuitively grasp a scene situation in a case where emergencies occur. As a result, it is impossible to schedule security resources effectively and timely, and cannot meet security needs of large-scale passenger flow and logistics places.

### SUMMARY

Embodiments of this invention provide a patrol robot and a patrol robot management system to recognize abnormal emergencies and realize real-time and effective monitoring on a patrolling area.

In some embodiments, provided is a patrol robot, including a robot body and a control system disposed on the robot body, where the robot body includes a chassis system and an accommodating cavity disposed on the chassis system.

The control system includes a main control module, an image processing module and an image collection device. The main control module and the image processing module are disposed in the accommodating cavity, the main control module is electrically connected to the image processing module, and the image processing module is electrically connected to the image collection device.

The image collection device includes a ball-type camera disposed on the accommodating cavity, and the image processing module comprises a behavior recognition unit. The behavior recognition unit is configured to perform pedestrian abnormal behavior recognition according to an ambient image collected by the image collection device so as to generate pedestrian abnormal behavior recognition information, and the main control module is configured to transmit the pedestrian abnormal behavior recognition information to a patrol robot management system.

In some embodiments, the image processing module further includes a face recognition unit. The face recognition unit is configured to perform face recognition according to the ambient image collected by the image collection device so as to generate personnel identity information, and the main control module is further configured to transmit the personnel identity information to the patrol robot management system.

In some embodiments, the image processing module further includes a license plate recognition unit. The license plate recognition unit is configured to perform vehicle license plate recognition according to the ambient image collected by the image collection device so as to generate vehicle license plate information and vehicle location information, and the main control module is further configured to transmit the vehicle license plate information and the vehicle location information to the patrol robot management system.

In some embodiments, the image collection device further includes at least one of the following: a gun-shaped camera and a multi-lens integrated camera. The image collection device is electrically connected to the main control module, and the main control module is further configured to transmit the ambient image collected by the image collection device to the patrol robot management system.

In some embodiments, the robot body further includes a lifting and lowering mechanism disposed on the accommodating cavity, and the image collection device is disposed on the lifting and lowering mechanism.

In some embodiments, the control system further includes a radio frequency information processing module and a radio frequency information collection device. The radio frequency information processing module is electrically connected to the main control module and the radio frequency information collection device, respectively. The radio frequency information processing module is configured to perform radio frequency card recognition according to radio frequency information collected by the radio frequency information collection device to generate radio frequency card identity information and radio frequency card quantity information.

The image processing module further includes a pedestrian recognition unit. The pedestrian recognition unit is configured to perform pedestrian recognition according to the ambient image collected by the image collection device so as to generate pedestrian identity information and pedestrian quantity information.

The main control module is further configured to transmit the radio frequency card identity information, the radio frequency card quantity information, the pedestrian identity information and the pedestrian quantity information to the patrol robot management system.

In some embodiments, the control system further includes a sound processing module and a sound collection device. The sound processing module is electrically connected to the main control module and the sound collection device, respectively.

The sound processing module includes an abnormal sound recognition unit configured to perform abnormal sound recognition according to sound information collected by the sound collection device so as to generate abnormal sound information, and the main control module is further configured to transmit the abnormal sound information to the patrol robot management system.

In some embodiments, the main control module is further configured to transmit the sound information collected by the sound collection device to the patrol robot management system.

The control system further includes a sound playing device. The main control module is further configured to receive the sound information transmitted by the patrol robot management system, and transmit the sound information received from the patrol robot management system to the sound playing device.

In some embodiments, the control system further includes a navigation and obstacle avoidance module. The navigation and obstacle avoidance module is electrically connected to the main control module, and the main control module is further configured to drive the robot body to move according to positioning information and navigation information obtained by the navigation and obstacle avoidance module.

The navigation and obstacle avoidance module includes at least one of the following: a two dimensional (2D) lidar ranging unit, a three dimensional (3D) lidar ranging unit, a pose measurement unit, an ultrasonic ranging unit, a satellite positioning and navigation unit and an anti-fall unit.

In some embodiments, the chassis system includes a height adjustable suspension and a differential gear train. The differential gear train includes a wheel, a servo motor, a reducer and a driver module, and the wheel is connected to the height adjustable suspension.

In some embodiments, further provided is a patrol robot management system, including at least one of the above-mentioned patrol robots.

In some embodiments, the patrol robot management system further includes a cloud server and a background monitoring system.

The cloud server is in communication connection with the background monitoring system and the at least one patrol robot, respectively.

The cloud server is configured to store video stream information collected by the image collection device and audio stream information collected by the sound collection device of each patrol robot, and transmit the video stream information and the audio stream information to the background monitoring system according to a video viewing instruction and an audio listening instruction from the background monitoring system.

In some embodiments, the patrol robot management system further includes a scheduling system.

The scheduling system is in communication connection with the background monitoring system and the at least one patrol robot, respectively.

The scheduling system is configured to control the at least one patrol robot to patrol according to a patrol task instruction from the background monitoring system.

In some embodiments, the cloud server is further configured to transmit on-site information collected by the each patrol robot to the background monitoring system, and the on-site information includes ambient information.

The cloud server is further configured to perform at least one of the following controls on one or more patrol robots according to a control instruction from the background monitoring system: control on a mechanical structure and control on an electrical structure. The mechanical structure includes a lifting and lowering mechanism disposed on the accommodating cavity of the each patrol robot, and the electrical structure includes a light assembly disposed on the robot body.

The scheduling system is further configured to transmit the on-site information collected by the each patrol robot to the background monitoring system, where the on-site information includes location information.

In some embodiments, the patrol robot management system further includes an automatic charging station. The background monitoring system is configured to, in a case where state information of the at least one patrol robot transmitted by the cloud server meets a preset condition, transmit a patrol robot charging instruction to the scheduling system, and the scheduling system is configured to control a patrol robot whose state information meets the preset condition to dock with the automatic charging station to get charged.

In some embodiments, the patrol robot management system further includes a wireless communication system. The wireless communication system is configured to cause the cloud server and the scheduling system to wirelessly communicate with the at least one patrol robot, respectively, and cause the cloud server and the scheduling system to wirelessly communicate with the background monitoring system, respectively.

### BRIEF DESCRIPTION OF DRAWINGS

FIG 1 is a schematic structural view illustrating a patrol robot body according to an embodiment of the present invention;
FIG 2 is a schematic structural diagram illustrating a control system in the patrol robot shown in FIG 1;
FIG. 3 is a schematic structural view illustrating a lifting and lowering mechanism according to an embodiment of the present invention;
FIG. 4 is a structural diagram illustrating another control system of the patrol robot according to an embodiment of the present invention; and
FIG. 5 is a schematic structural diagram illustrating a patrol robot management system according to an embodiment of the present invention.

### DETAILED DESCRIPTION

The present invention is described below in conjunction with the drawings and embodiments. The embodiments described herein are merely intended to explain and not to limit the present invention. In order to facilitate description, only parts not all of structures related to the present invention are illustrated in the drawings.

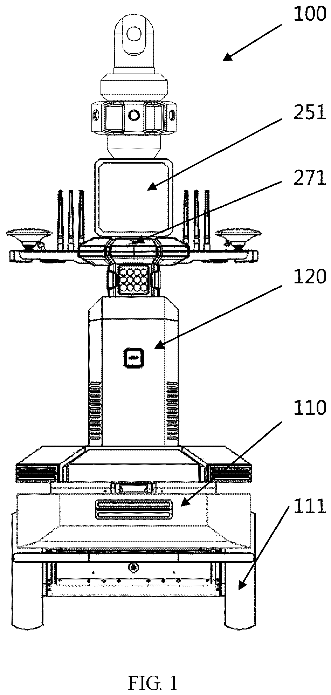

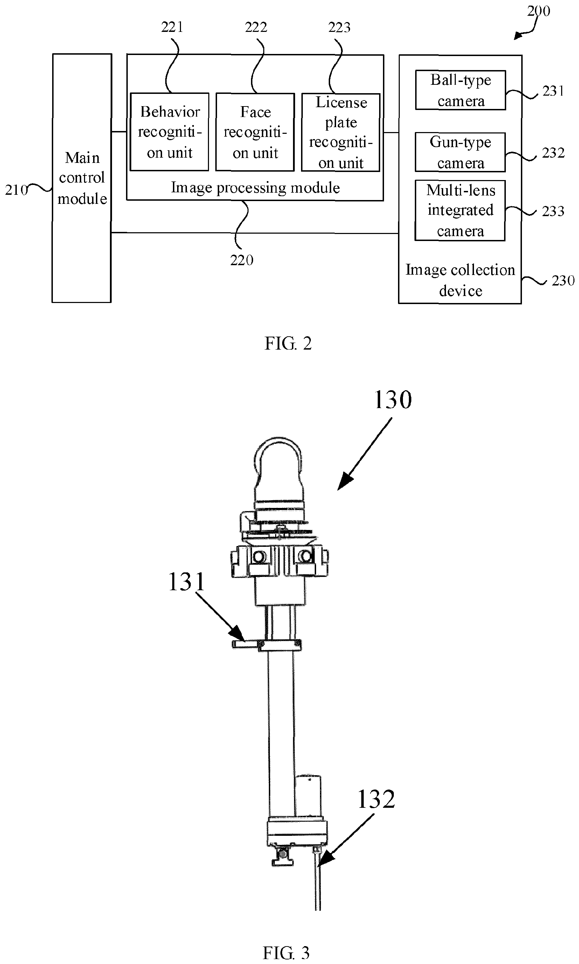

FIG. 1 is a schematic structural view illustrating a patrol robot body according to some embodiments of the present invention, and FIG. 2 is a schematic structural diagram illustrating a control system in the patrol robot shown in FIG. 1. With reference to FIGS. 1 and 2, the patrol robot includes a robot body 100 and a control system 200 disposed on the robot body 100. The robot body 100 includes a chassis system 110 and an accommodating cavity 120 disposed on the chassis system 110. The control system 200 includes a main control module 210, an image processing module 220 and an image collection device 230. The main control module 210 and the image processing module 220 are disposed in the accommodating cavity 120, the main control module 210 is electrically connected to the image processing module 220, and the image processing module 220 is electrically connected to the image collection device 230. The image collection device 220 includes a ball-type camera 231 disposed on the accommodating cavity 120, and the image processing module 220 includes a behavior recognition unit 221. The behavior recognition unit 221 is configured to recognize pedestrian abnormal behavior according to an ambient image collected by the image collection device 230 so as to generate pedestrian abnormal behavior recognition information, and the main control module 210 is configured to transmit the pedestrian abnormal behavior recognition information to a patrol robot management system.

The control system 200 is disposed on the robot body 100 and configured to perform robot driving, information collection, control, communication, etc.. The control system 200 includes physical devices such as an information collection device, a control module, a processor, a transmission medium, and also includes control programs set in the control module, the processor and so on. The ball-type camera 231 in the image collection device 230 is configured to collect an ambient image of an area where the patrol robot is located, where the ambient image may be a video image or an ambient photo. The ball-type camera 231 can be controlled to realize zoom and turn, that is, an ambient picture with a wide angle of view may be collected, thereby obtaining a global information, and an image with a small angle of view may be obtained by focusing, thereby obtaining detailed information. The behavior recognition unit 221 disposed in the image processing device 220 can perform recognition on a pedestrian in a collected picture. In some embodiments, the behavior recognition unit 221 can also perform recognition on pedestrian abnormal behaviors such as personnel gathering, fights, etc., so as to generate the pedestrian abnormal behavior recognition information and report the pedestrian abnormal behavior recognition information to the patrol robot management system.

During an operation process of the patrol robot, a recognition function of the pedestrian abnormal behavior can be started at a preset position in the task. That is, the robot stops running, the ball-type camera starts to cruise and rotate automatically, and the image is collected through the ball-type camera and detected by the behavior recognition unit. If abnormal phenomena such as personnel gathering and fighting are detected, an abnormal alarm message is immediately uploaded to the patrol robot management system through the main control module, and a background monitoring system in the management system can retrieve and display the real-time picture of the patrol robot. A background duty personnel can remotely take over the patrol robot to control the patrol robot to move, and adjust an observation angle of the ball-type camera, so as to zoom in to view an on-site situation, etc.. In some embodiments, the behavior recognition unit can effectively recognize abnormal behavior events in life, and currently supported behaviors include fighting, stealing, shooting, arson, traffic accidents, etc. In some embodiments, a video stream is first obtained from the image collection device, and is divided into timing segments, and then imported into a pre-trained 3D convolution network model for feature extraction, and then a score of each segment is calculated by a score function. A score of a normal video clip is generally low, while a score of an abnormal video clip is generally high. Finally, a reasonable threshold value is set to determine whether or not there is abnormal behavior in the video.

In the present invention, the image collection device including the ball-type camera is disposed in the control system of the patrol robot, and the image processing module including the behavior recognition unit analyzes the pedestrian behavior, determines the pedestrian abnormal behavior and reports the pedestrian abnormal behavior to the patrol robot management system, such that automatic recognition and report of the abnormal emergencies in a patrolling area can be achieved, and a problem that manpower patrol and a monitoring network of the fixed-point camera are unable to monitor valid abnormal events in real-time due to inherent weaknesses such as easy fatigue of security guard and dead corners of cameras is solved. The patrol robot and patrol robot management system provided by the embodiment of the present invention can in real-time and dynamically assist in recognizing and monitoring of abnormal events, and thus can meet security needs of large-scale passenger flow and logistics places.

In some embodiments, with continued reference to FIG. 2, the image processing module 220 further includes a face recognition unit 222. The face recognition unit 222 is configured to perform face recognition according to the ambient image collected by the image collection device 230 so as to generate personnel identity information, and the main control module 210 is further configured to transmit the personnel identity information to the patrol robot management system.

When the ball-type camera collects ambient pictures, recognition on pedestrians in the ambient picture can be performed. In some embodiments, a face image collected by the camera can be detected and tracked, and face recognition information can be transmitted to the patrol robot management system to get compared and screened by the background monitoring system, thereby managing a personnel flow status. Moreover, a blacklist and whitelist comparison function can be set in the background monitoring system, that is, after the face recognition unit transmits the face information to the main control module and the main control module uploads the face information to the patrol robot management system, the background monitoring system compares the face information with face information in the blacklist and whitelist, and once a person in the blacklist is recognized, an abnormality can be issued immediately. In addition, the background monitoring system can immediately display a real-time picture collected by the patrol robot, and the background duty personnel can remotely take over the patrol robot to control the patrol robot to move, and adjust the observation angle of the ball-type camera, so as to zoom in to view the on-site situation, etc..

In some embodiments, with continued reference to FIG. 2, the image processing module 220 further includes a license plate recognition unit 223. The license plate recognition unit 223 is configured to perform vehicle license plate recognition according to the ambient image collected by the image collection device 230 so as to generate vehicle license plate information and vehicle location information, and the main control module 210 is configured to transmit the vehicle license plate information and the vehicle location information to the patrol robot management system.

When the ambient information is collected by the ball-type camera, the license plate recognition unit in the image processing module can recognize and analyze the license plate and obtain the license plate number to generate the vehicle license plate information, and determine the vehicle location information according to a location of the patrol robot. Similarly, after the main control module uploads the vehicle license plate information and the vehicle location information recognized by the license plate recognition unit to the patrol robot management system, the background monitoring system compares the vehicle license plate information and the vehicle location information with a vehicle database, and displays all comparison results and license plate pictures in a display interface of the background monitoring system. The vehicle database can also set a blacklist and a whitelist of vehicles. If it is found that a license plate is not in the whitelist, the license plate is found in the blacklist, or a parking position of the vehicle is not consistent with a position pre-recorded in the database, an abnormality can be issued immediately. In addition, a real-time picture of the patrol robot can be displayed by the display interface of the background monitoring system, and the background duty personnel can remotely take over the robot to control the robot to move, and adjust the observation angle of the ball-type camera, so as to zoom in to view an on-site situation, etc..

With continued reference to FIGS. 1 and 2, the image collection device 230 further includes a gun-shaped camera 232 and a multi-lens integrated camera 233. The image collection device 230 is electrically connected to the main control module 210, and the main control module 210 is further configured to transmit the ambient image collected by the image collection device 230 to the patrol robot management system. In some embodiments, the image collection device 230 may also include one of the gun-shaped camera 232 or the multi-lens integrated camera 233.

The ball-type camera 231 can merely collect images for part of ambience relatively, and the ball-type camera 231 should be driven to rotate to collect all ambient pictures. Therefore, in order to achieve 360° full-angle coverage image collection, some embodiments of the present invention provide a vision solution that a gun-type camera or a multi-lens integrated camera is combined with the ball-type camera. With this scheme, a function of gun-ball linkage is supported and an observation target can be tracked at a fixed point by controlling rotation of the ball-type camera. Moreover, the image collection device with combination of the gun-type camera or the multi-lens integrated camera and the ball-type camera can better obtain global information and detailed information of the ambient image and obtain a clearer video image, thereby improving accuracy of functions such as pedestrian abnormal behavior recognition, pedestrian face recognition and license plate recognition.

In addition, during performing recognition on pedestrian abnormal behavior, the image collection device collects ambient images of a relatively wide range as much as possible to increase reliability of recognition on pedestrian abnormal behavior. In some embodiments, collection of ambient pictures of a wide range can be realized by raising a height of the image collection device. Therefore, FIG. 3 is a schematic structure view illustrating a lifting and lowering mechanism according to some embodiments of the present invention. With reference to FIGS. 1 and 3, in some embodiments, the robot body 100 further includes a lifting and lowering mechanism 130 disposed on the accommodating cavity 120, and the image collection device is disposed on the lifting and lowering mechanism 130.

The ball-type camera 231 shown in FIG. 1 is installed on a top end of the lifting and lowering mechanism 130, and the lifting and lowering mechanism 130 is hidden on an upper portion of the accommodating cavity 120 of the robot body 100. The lifting and lowering mechanism 130 adopts a spiral screw type lifting and lowering rod structure, may be directly driven by a Direct Current motor, and can realize vertical linear movement via a limit block 131. During lifting and lowering, a cable is easy to wind and knot since the cable is relatively longer and thicker. Therefore, a spiral tube 132 is adopted to constrain the cable, thereby ensuring security during lifting and lowering the cable.

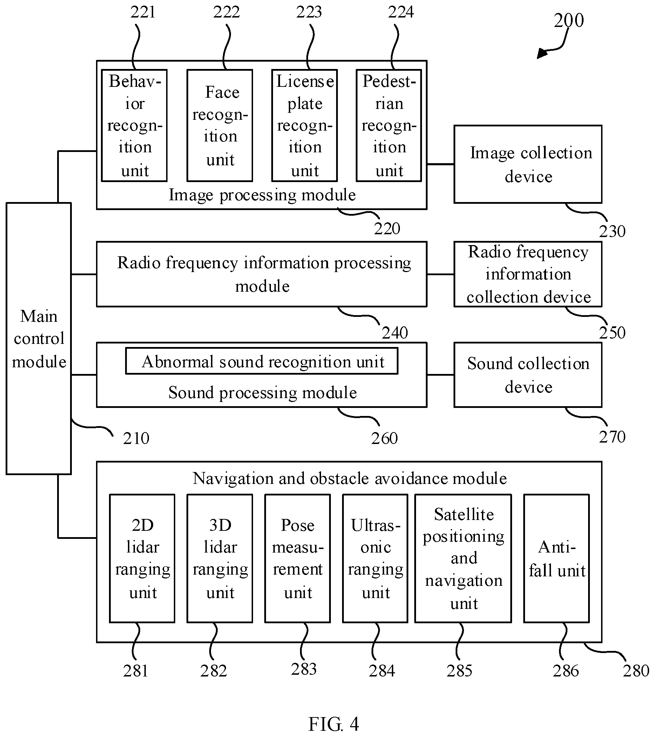

Exemplarily, in places such as convention and exhibition centers and logistics warehouses, personnel are usually restricted to ensure that there are no outsiders in the place. Therefore, identity cards are usually issued to staff and participants to provide identification. Therefore, some embodiments of the present invention further provide a patrol robot for identification of identity cards. FIG. 4 is a structural diagram illustrating another control system of the patrol robot according to some embodiments of the present invention. With reference to FIGS. 1 and 4, the control system further includes a radio frequency information processing module 240 and a radio frequency information collection device 250. The radio frequency information processing module 240 is electrically connected to the main control module 210 and the radio frequency information collection device 250, respectively. The radio frequency information processing module 240 is configured to perform recognition on a radio frequency card according to radio frequency information collected by the radio frequency information collection device 250 so as to generate radio frequency card identity information and radio frequency card quantity information. The image processing module 220 further includes a pedestrian recognition unit 224. The pedestrian recognition unit 224 is configured to recognize pedestrians according to the ambient image collected by the image collection device 230 so as to generate pedestrian identity information and pedestrian quantity information. The main control module 210 is further configured to transmit the radio frequency card identity information, the radio frequency card quantity information, the pedestrian identity information and the pedestrian quantity information to the patrol robot management system.

With reference to FIGS. 1 and 4, the radio frequency information collection device 250 may include a radio frequency card reader antenna 251, and the radio frequency information processing module 240 may include a radio frequency card reader controller. In a recognition process of radio frequency card, the radio frequency card reader controller can obtain identity information in the radio frequency card and a number of radio frequency cards. Correspondingly, identity information and a number of personnel in the field can be obtained. Certainly, the radio frequency card reader controller can only obtain information of the personnel the wearing radio frequency card. In order to recognize information of personnel who do not wear the radio frequency card, a pedestrian recognition unit can be set cooperatively. Similarly, by analyzing the ambient image collected by the image collection device, recognizing identity information and a number of personnel in the ambient image, the personnel in the whole place can be comprehensively recognized and monitored. In some embodiments, in an operating process, the patrol robot is configured to detect a number of pedestrians in the current picture. When recognizing the following two states, the patrol robot is configured to report the abnormal alarm message to the background monitoring system for display. In a first state, based on a judgment result of the radio frequency signal, if a number of pedestrians recognized is greater than a number of radio frequency cards recognized by radio frequency, an alarm will be issued; and in a second state, if the patrol robot operates in a specific area where no one should enter at a specified time, an alarm will be issued directly regardless of a recognition result of the radio frequency. After receiving an abnormal alarm, a video monitoring interface can immediately display a real-time picture collected by the robot, and the background duty personnel can remotely take over the robot to control the robot to move, and adjust the observation angle of the ball-type camera, so as to zoom in to view the on-site situation, etc..

In some embodiments, with reference to FIG. 4, the control system may further include a sound processing module 260 and a sound collection device 270. The sound processing module 260 is electrically connected to the main control module 210 and the sound collection device 270, respectively. The sound processing module 260 includes an abnormal sound recognition unit 261, the abnormal sound recognition unit 261 is configured to perform recognition on abnormal sound according to sound information collected by the sound collection device 270 so as to generate abnormal sound information, and the main control module 210 is configured to transmit the abnormal sound information to the patrol robot management system.

The sound collection device 270 may include a microphone 271. After the microphone collects sound data, the abnormal sound recognition unit processes the sound data to recognize abnormal sounds, such as screams, explosions, etc., and reports the abnormal information to the patrol robot management system. At this moment, the background monitoring system in the management system can operate such as monitor, intervene and control on-site pictures.

In addition, the main control module is further configured to transmit the sound information collected by the sound collection device to the patrol robot management system. The control system further includes a sound playing device. The main control module is further configured to receive the sound information transmitted by the patrol robot management system, and transmit the sound information received from the patrol robot management system to the sound playing device. That is, the patrol robot further has a bi-directional voice intercom function, and may include two kinds of intercom mode. In mode I, the background monitoring system in the patrol robot management system actively turns on a voice interaction function by transmitting an instruction; and in mode II, a help button is pressed at a robot terminal to turn on the voice interaction function.

With respect to the patrol robot, a most basic ability thereof is to patrol. In order to enable the patrol robot realize functions of navigation and obstacle avoidance and patrolling according to a preset path, a navigation obstacle avoidance module is set. With continued reference to FIG. 4, the control system further includes a navigation and obstacle avoidance module 280. The navigation and obstacle avoidance module 280 is electrically connected to the main control module 210, and the main control module 210 is configured to drive the robot body 100 to move according to positioning information and navigation information obtained by the navigation and obstacle avoidance module 280. The navigation and obstacle avoidance module 280 includes one or more a two dimensional (2D) lidar ranging unit 281, a three dimensional (3D) lidar ranging unit 282, a pose measurement unit 283, an ultrasonic ranging unit 284, a satellite positioning and navigation unit 285 or an anti-fall unit 286.

In some embodiments, one or more the above ranging units can be combined for accurate positioning and ranging. The 2D/3D lidar ranging unit can obtain ambient characteristic information, and the pose measurement unit such as a gyro goniometer and an attitude and heading reference system module can obtain an orientation and a displacement amount of the patrol robot. The ultrasonic ranging unit can be installed around a shell of the robot and perceive surrounding ambient obstacles in 360 degrees in all directions. The satellite positioning and navigation unit can obtain a global satellite navigation system signal and obtain an absolute position and orientation of the patrol robot in an outdoor environment. The anti-fall unit such as an infrared ranging sensor and a depth camera can measure close-range ambient information. Through a variety of distance measurement and positioning units, position information and ambient information of the patrol robot can be accurately obtained. Thus, according to the obtained positioning information and ambient information, map construction and patrol path navigation and other functions can be realized.

The satellite positioning and navigation unit can assist the 2D/3D lidar ranging unit to perceive outdoor complex ambience, realize a long-distance ranging and positioning function when an ambient area is too large, and make up for a shortcoming of relatively short distance measurement of the 2D/3D lidar ranging unit. The anti-fall unit can perceive ambience in a close range, thereby solving a problem of blind area in the close scanning of the 2D/3D lidar. In addition, the anti-fall unit can recognize a road surface profile difference and assist the robot in obstacle avoidance and navigation. In addition, the image collection device of the patrol machine control system can also be used to perform functions such as obstacle recognition and ranging by using images. Moreover, security protection touch edges can be arranged at a front end and a rear end of the patrol robot chassis system as a last physical security protection of the robot. Upon collision, the robot is immediately braked to ensure security of personnel and property.

In addition, the patrol robot provided by the embodiment of this invention is further provided with a chassis system. With reference to FIG. 1, the chassis system 110 of the patrol robot includes a height adjustable suspension (not shown in the figure) and a differential gear train. The differential gear train includes a wheel 111, a servo motor, a reducer and a driver module, and the wheel is connected to the height adjustable suspension.

In some embodiments, the main control module in the control system drives the wheel to move by controlling the driver module, so as to realize a patrol function of the patrol robot. The differential gear train is connected to an independent height adjustable suspension, and each wheel can be driven separately, thereby realizing 360 °steering in-place. The independent height adjustable suspension can adjust a height of a chassis of the patrol robot, so as to adapt to different road conditions and enhance the adaptability to a variety of terrain and driving stability of the robot. The patrol robot provided by the embodiment of the present invention can achieve a maximum moving speed of 1.5m/s, can climb a vertical slope of 15° and move on a horizontal slope of 15 °, and can cross obstacles with a height of 100mm, etc..

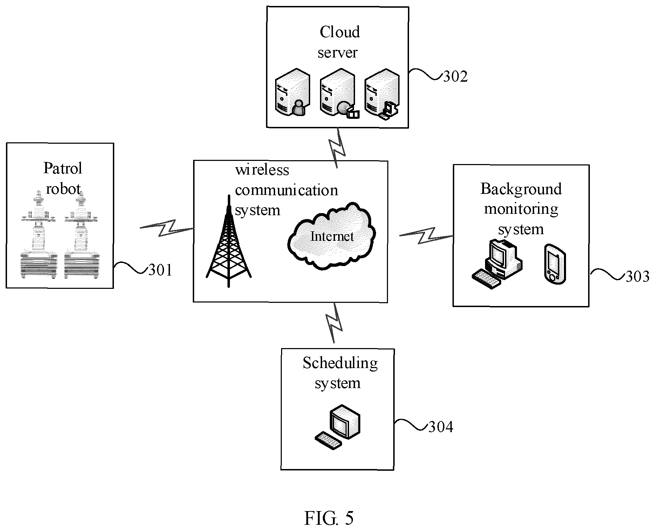

Some embodiments of the present invention provide a patrol robot management system. FIG. 5 is a schematic structural diagram illustrating a patrol robot management system according to some embodiments of the present invention. With reference to FIG. 5, the patrol robot management system includes at least one of any kind of patrol robots 301 provided by the embodiments of the present invention. Since the patrol robot management system adopts the patrol robot 301 provided in the embodiment of the present invention, the patrol robot management system also has effects of the patrol robot described above. In some embodiments, the patrol robot management system provided by the embodiments of the present invention can also include other devices and systems for supporting normal operation of the patrol robot management system.

With continued reference to FIG. 5, in some embodiments, the patrol robot management system provided by the embodiment of the present invention further includes a cloud server 302 and a background monitoring system 303. The cloud server 302 is in communication connection with the background monitoring system 303 and the at least one patrol robot 301, respectively. The cloud server 302 is configured to store video stream information collected by the image collection device and audio stream information collected by the sound collection device of the patrol robot 301, and transmit the video stream information and the audio stream information to the background monitoring system 303 according to a video viewing instruction and an audio listening instruction from the background monitoring system 303. The cloud server 302 may be further configured to transmit ambient information and other on-site information collected by the patrol robot to the background monitoring system 303.

The cloud server 302 serves as a repeater station between a frontend patrol robot 301 and a backend background monitoring system 303, and is configured to forward and store compressed data such as video stream information and audio stream information collected by the at least one patrol robot. The background monitoring system can play the video and audio collected by the at least one patrol robot in real time, and can access and play the video and the audio stored in the cloud server. A cloud server of a streaming medium adopts a distributed architecture. When capacity or bandwidth of related servers cannot meet requirements, a plurality of media servers can be clustered to expand the capacity and the bandwidth. In addition, the cloud server also has a function of forwarding other information such as a command. A commands transmitted by the background monitoring system for the patrol robot can be collected and forwarded to the patrol robot by the cloud server. Exemplarily, after the background monitoring system receives the pedestrian abnormal behavior recognition information uploaded by the patrol robot, when the ball-type and gun-type cameras in the image collection device need to be adjusted, the control command of gun-ball linkage can be forwarded by the cloud server to the patrol robot to obtain a better video image. In addition, commands such as movement control of the patrol robot is further included. The cloud server can also forward temperature and humidity information set by the patrol robot and a visual detection result generated by the image processing module to the background monitoring system, so as to realize monitoring of the background monitoring system.

With continued reference to FIG. 5, the patrol robot management system further includes a scheduling system 304 that is in communication connection with the background monitoring system 303 and the at least one patrol robot 301, respectively. The scheduling system 304 is configured to control the patrol robot 301 to patrol according to a patrol task instruction from the background monitoring system 303. The scheduling system 304 may be further configured to transmit on-site information such as position information collected by each patrol robot 301 to the background monitoring system 303.

The scheduling system 304 manages the position information and navigation information of the patrol robot 301, and transmits patrol tasks to the patrol robot 301, etc., so as to realize stable scheduling services such as task scheduling, traffic scheduling, and charging management. The scheduling system 304 can coordinate orderly work of the patrol robot 301 and related equipment, and is a medium for a user to control coordinated work of a plurality of robots.

The patrol robot management system further includes an automatic charging station (not shown in the figure). In a case where state information of the patrol robot transmitted by the cloud server meets a preset condition, the background monitoring system 303 is configured to transmit a patrol robot charging instruction to the scheduling system 304, such that the scheduling system 304 controls the patrol robot 301 to dock with the automatic charging station to get charged.

The automatic charging station includes an automatic charging house and automatic charging equipment. The patrol robot moves to a designated parking area in the automatic charging house to get charged. The automatic charging equipment positions the position information of the patrol robot through a sensor, controls a mechanical arm to move, and actively docks with the patrol robot to realize an automatic charging function. In some embodiments, when power of one or more patrol robots is less than 20%, the scheduling system is configured to transmit a charging task to the one or more patrol robots, and if the one or more patrol robots have a current task with a relatively high priority, the charging task will be operated after the current task with a relatively high priority is executed; and if the one or more patrol robots have a current task with a relatively low priority, the current task will be terminated immediately to operate the charging task. The one or more patrol robots return to the automatic charging station, and transmit an arrival instruction to the charging station after arriving at a designated parking area. The charging station determines a position of a charging pole piece on the patrol robot through an infrared sensor and other measuring equipment, then controls the mechanical arm to start movement, docks a charging plate with the charging pole piece of the patrol robot, and starts the charging task. When the power of the patrol robot reaches 100%, the charge is completed, the mechanical arm returns to an original position, and the patrol robot exits the charging station to continue with an unfinished task. If there is no task at present, the patrol robot then returns to a preset initial position.

With continued reference to FIG. 5, in the patrol robot management system, the cloud server 302 and the scheduling system 304 are respectively in communication with the patrol robot 301 and the background monitoring system 303. Therefore, a wireless communication system can be set up in the management system to realize the communication. In some embodiments, the wireless communication system may adopt Wireless Fidelity (WIFI) or a 4th Generation Mobile Communication Technology (4G) communication mode to enable the patrol robot management system to meet communication requirements of fast deployment and strong adaptability to scenes.

## Claims

1. A patrol robot, comprising a robot body and a control system disposed on the robot body, wherein the robot body comprises a chassis system and an accommodating cavity disposed on the chassis system;
wherein the control system comprises a main control module, an image processing module and an image collection device, wherein the main control module and the image processing module are disposed in the accommodating cavity, the main control module is electrically connected to the image processing module, and the image processing module is electrically connected to the image collection device;
wherein the image collection device comprises a ball-type camera disposed on the accommodating cavity, and the image processing module comprises a behavior recognition unit, wherein the behavior recognition unit is configured to perform pedestrian abnormal behavior recognition according to an ambient image collected by the image collection device so as to generate pedestrian abnormal behavior recognition information, and the main control module is configured to transmit the pedestrian abnormal behavior recognition information to a patrol robot management system.

2. The patrol robot according to claim 1, wherein the image processing module further comprises a face recognition unit, wherein the face recognition unit is configured to perform face recognition according to the ambient image collected by the image collection device so as to generate personnel identity information, and the main control module is further configured to transmit the personnel identity information to the patrol robot management system.

3. The patrol robot according to claim 1 or 2, wherein the image processing module further comprises a license plate recognition unit, wherein the license plate recognition unit is configured to perform vehicle license plate recognition according to the ambient image collected by the image collection device so as to generate vehicle license plate information and vehicle location information, and the main control module is further configured to transmit the vehicle license plate information and the vehicle location information to the patrol robot management system.

4. The patrol robot according to claim 1, wherein the image collection device further comprises at least one of the following: a gun-shaped camera and a multi-lens integrated camera; the image collection device is electrically connected to the main control module, and the main control module is further configured to transmit the ambient image collected by the image collection device to the patrol robot management system.

5. The patrol robot according to claim 4, wherein the robot body further comprises a lifting and lowering mechanism disposed on the accommodating cavity, and the image collection device is disposed on the lifting and lowering mechanism.

6. The patrol robot according to claim 1, wherein the control system further comprises a radio frequency information processing module and a radio frequency information collection device, wherein the radio frequency information processing module is electrically connected to the main control module and the radio frequency information collection device, respectively, and the radio frequency information processing module is configured to perform radio frequency card recognition according to radio frequency information collected by the radio frequency information collection device so as to generate radio frequency card identity information and radio frequency card quantity information;
wherein the image processing module further comprises a pedestrian recognition unit, and the pedestrian recognition unit is configured to perform pedestrian recognition according to the ambient image collected by the image collection device so as to generate pedestrian identity information and pedestrian quantity information;
wherein the main control module is further configured to transmit the radio frequency card identity information, the radio frequency card quantity information, the pedestrian identity information and the pedestrian quantity information to the patrol robot management system.

7. The patrol robot according to claim 1 or 6, wherein the control system further comprises a sound processing module and a sound collection device, wherein the sound processing module is electrically connected to the main control module and the sound collection device, respectively;
the sound processing module comprises an abnormal sound recognition unit, wherein the abnormal sound recognition unit is configured to perform abnormal sound recognition according to sound information collected by the sound collection device so as to generate abnormal sound information, and the main control module is further configured to transmit the abnormal sound information to the patrol robot management system.

8. The patrol robot according to claim 7, wherein the main control module is further configured to transmit the sound information collected by the sound collection device to the patrol robot management system;
the control system further comprises a sound playing device, and the main control module is further configured to receive sound information transmitted by the patrol robot management system, and transmit the sound information received from the patrol robot management system to the sound playing device.

9. The patrol robot according to claim 1, wherein the control system further comprises a navigation and obstacle avoidance module, wherein the navigation and obstacle avoidance module is electrically connected to the main control module, and the main control module is further configured to drive the robot body to move according to positioning information and navigation information obtained by the navigation and obstacle avoidance module;
wherein the navigation and obstacle avoidance module comprises at least one of the following:
a two dimensional (2D) lidar ranging unit, a three dimensional (3D) lidar ranging unit, a pose measurement unit, an ultrasonic ranging unit, a satellite positioning and navigation unit and an anti-fall unit.

10. The patrol robot according to claim 1, wherein the chassis system comprises a height adjustable suspension and a differential gear train, the differential gear train comprises a wheel, a servo motor, a reducer and a driver module, wherein the wheel is connected to the height adjustable suspension.

11. A patrol robot management system, comprising at least one patrol robot according to any one of claims 1 to 10.

12. The patrol robot management system according to claim 11, further comprising: a cloud server and a background monitoring system,
wherein the cloud server is in communication connection with the background monitoring system and the at least one patrol robot, respectively; and
wherein the cloud server is configured to store video stream information collected by the image collection device and audio stream information collected by the sound collection device of each patrol robot, and transmit the video stream information and the audio stream information to the background monitoring system according to a video viewing instruction and an audio listening instruction from the background monitoring system.

13. The patrol robot management system according to claim 12, further comprising: a scheduling system,
wherein the scheduling system is in communication connection with the background monitoring system and the at least one patrol robot, respectively;
wherein the scheduling system is configured to control the at least one patrol robot to patrol according to a patrol task instruction from the background monitoring system.

14. The patrol robot management system according to claim 13, wherein
the cloud server is further configured to transmit on-site information collected by the each patrol robot to the background monitoring system, wherein the on-site information comprises ambient information;
the cloud server is further configured to perform at least one of the following controls on one or more patrol robots according to a control instruction from the background monitoring system:
control on a mechanical structure control and control on an electrical structure; wherein the mechanical structure comprises a lifting and lowering mechanism disposed on the accommodating cavity of the each patrol robot, and the electrical structure comprises a light assembly disposed on the robot body; and
the scheduling system is further configured to transmit the on-site information collected by the each patrol robot to the background monitoring system, wherein the on-site information comprises location information.

15. The patrol robot management system according to claim 13 or 14, further comprising an automatic charging station;
wherein the background monitoring system is configured to, in a case where state information of the at least one patrol robot transmitted by the cloud server meets a preset condition, transmit a patrol robot charging instruction to the scheduling system, and the scheduling system is configured to control a patrol robot whose state information meets the preset condition to dock with the automatic charging station to get charged.

16. The patrol robot management system according to claim 13, further comprising a wireless communication system;
wherein the wireless communication system is configured to cause the cloud server and the scheduling system to wirelessly communicate with the at least one patrol robot, respectively, and cause the cloud server and the scheduling system to wirelessly communicate with the background monitoring system, respectively.
